Europäisches Patentamt

European Patent Office

Office européen des brevets

(19)

(11) Publication number: **0 273 128**
**A1**

(12) **EUROPEAN PATENT APPLICATION**

(21) Application number: **87115629.5**

(22) Date of filing: **24.10.87**

(51) Int. Cl.4 **G01N 35/06** , G01F 23/14 , G01N 1/00

(30) Priority: **27.10.86 JP 255298/86**

(43) Date of publication of application:
**06.07.88 Bulletin 88/27**

(84) Designated Contracting States:
**DE FR GB IT**

(71) Applicant: **KABUSHIKI KAISHA KYOTO DAIICHI KAGAKU**
**57 Nishiaketa-cho Higashikujo, Minami-ku Kyoto-shi Kyoto 601(JP)**

(72) Inventor: **Uchigaki, Takatoshi**
**5-7, Kamikomahigashitsukurimichi**
**Yamashiro-cho**
**Soraku-gun Kyoto(JP)**
Inventor: **Komada, Yoshito**
**21-37, Kitashinmachi**
**Ikoma-shi Nara(JP)**

(74) Representative: **Dipl.-Ing. H. Hauck Dipl.-Phys.**
**W. Schmitz Dipl.-Ing. E. Graalfs Dipl.-Ing. W.**
**Wehnert Dr.-Ing. W. Döring**
**Neuer Wall 41**
**D-2000 Hamburg 36(DE)**

(54) Method for detecting a liquid surface and the equipment.

(57) The present invention relates to a method and the equipment wherein the minimum error of sampling quantity is obtained in automatic chemical analysis. The invention has a notable feature that air is discharged or sucked from a sampling nozzle (2) by making use of a sample suction pump (3) and the sample liquid surface (L) is detected by detecting a pressure change in the sampling nozzle.

EP 0 273 128 A1

## Method for Detecting a Liquid Surface and the Equipment

BACKGROUND OF THE INVENTION

This invention relates to a method for detecting the liquid surface of reagent or sample in an automatic chemical analysis apparatus and to the equipment.

In the area of automatic chemical analysis, a process that a sample is put into a detection equipment and discharged after measurement is adopted. In the process, a sample is required to be put into a measurement apparatus quantitatively to measur the sample. This putting a sample into a measurement apparatus is referred to as sampling.

As a method for sampling, generally, a suction nozzle is dipped into a sample in a sample vessel and the sample is sucked by a suction pump.

In this case, there is a problem on the sample liquid surface. Since excessively dipping the nozzle into the sample causes a measurement error, the immersion of minimum necessity with detecting the liquid surface is important.

As the reason, in dipping a nozzle into a sample, the sample sticks to the outside of the nozzle, and in dipping the nozzle into a reaction liquid, the sticking sample reacts with it similarly with the sample sample, resulting to an error due to an increase in the sample quantity. On the other hand, in a method wherein a sampled sample is blown out by air, dipping a nozzle into a reaction liquid is not necessary, and a sample sticking to the outside of the nozzle appears to give no efect on the reaction liquid. But, on the contrary, this method also has a defect causing an error from that perfectly blowing out is difficult and the sample sometimes drops down from the outside of the nozzle.

From these reasons, sampling without dipping a suction nozzle into a sample is required as far as possible.

For the purpose, the above-mentioned liquid surface detection is necessary.

Various methods for detecting a liquid surface have been known until now. For example, there are the following methods; a structure wherein an electric signal is made when an electrode contacts with a liquid surface in moving it in close to the liquid, an optical method for detecting a liquid surface by measuring the intensity of light reflecting from the liquid surface by using glass fiber, or a method for detecting a liquid surface by detecting the change of pressure in an air discharging pipe other than a nozzle in moving the pipe in close to the liquid surface.

As an additional method, an air discharging pipe of the equal shape with a suction nozzle is separately prepared, and by discharging aire from the suction nozzle and the discharging pipe at the same time the differential pressure is detected.

In the above-mentioned methods, the electrode method has defects that inserting electrodes into the sample vessel of narrow mouth is difficult and an incorrect action occurs by a short through liquid between both electrodes.

The methods making use of an air discharging pipe have been required to prepare the discharging pipe separately, and to prepare an air supplying equipment in order to generate an air pressure to be measured. The existence of the discharging pipe prepared separately has made difficult inserting it into the sample vessel of narrow inside diameter or a highly strict control has been required. Further, the necessity of preparing the air compressor separately increases the cost price, results in a large size, and increases the additional equipments, lowering the reliability.

In the method wherein a differential pressure is detected, a detectable pressure supplying equipment composed of a three way valve to discharge air from a nozzle tip, a discharge pipe for detecting the differential pressure, a sample suction pump, and a pressure regulator has been required to be prepared.

SUMMARY OF THE INVENTION

In view of the above-mentioned present state of things, the inventors of the present invention have assiduously made studies, and as the results they have reached the present invention characterized in that air is discharged or sucked from a sampling nozzle by making use of a sample suction pump, that it, by detecting a pressure change in air discharged or sucked from the sample suction pump in the sampling nozzle, the approach or contact of the sampling nozzle with the liquid surface to be sampled is detected to measure the liquid level.

"Sample" here refers to an object wherein the level of a specific substance included is measured, that is blood or urine in many cases.

"Sampling" refers to taking a sample into the level measuring part by sucking the sample from a sample vessel by a nozzle.

"Nozzle approach" refers to a point of time wherein a nozzle tip approaches a sample liquid surface and pressure resistance at suction or discharge becomes larger. The practical distance is 1~a few mm, varying with the inside diameter of the nozzle and the air quantity of suction or discharge. Accordingly, if the inside diameter and the air discharge quantity are determined and they are memorized, the approach point of time can be detected.

"Contact" refers to the contact of a nozzle tip with a sample liquid surface.

As "Pressure detection equipment", anything capable of measuring a pressure change, namely a pressure curve rise, may be preferable, including a pressure sensor such as a so-called diffusion type semiconductor.

"Sample suction pump" refers to a reciprocating pump of piston or diaphragm type for sucking a sample.

In the present invention, air is supplied to a sampling nozzle by making use of the discharge stroke of a sample suction pump, and with discharging air from the nozzle tip and with measuring a pressure in the sampling nozzle by a pressure sensor, the nozzle is brought close to a liquid surface, and the point wherein the pressure change suddenly occurs is regarded as the liquid surface or the vicinity. The degree of the pressure change can distinguish between the liquid surface itself and the vicinity. When the nozzle is brought close to the vicinity of the liquid surface, the air discharge decreases, the pressure curve rising. The point of the pressure rise is regarded as the vicinity of the liquid surface, and in further bringing the nozzle close to the surface, the nozzle contacts with the liquid surface and the nozzle mouth is closed, resulting in the more sudden rise of the pressure curve, whose point is regarded as the liquid surface.

However, in case the air discharge is an extremely small amount and the pressure change at the vicinity point is so small that the detection is difficult, the pressure rise is sometimes recognized only at the time of the nozzle contact with the liquid surface. Since this is a matter of air discharge quantity and the performance of the pressure detection equipment, it doesn't limit the invention.

After thus memorizing the liquid surface level in a memory, when the nozzle is dipped into the liquid, the nozzle is once allowed to go up, and then the nozzle is dipped into the liquid until a specified depth. The reason the nozzle is once allowed to go up is that in measuring the liquid surface level an air bubble remains in the nozzle tip because of discharging air from the nozzle, and in sucking a sample the sample quantity is less than the normal one by the bubble volume, resulting in an error of sample quantity. It is well to set the sample suction quantity by adding the bubble volume, but there is a problem that a variety of bubble size causes a scattering.

Further, the detection of a liquid surface by detecting a pressure change in a sampling nozzle can be conducted also by sucking air from the nozzle tip. That is a method for detecting a liquid surface or the vicinity by a pressure change by bringing the nozzle close to the liquid surface with sucking air from the nozzle tip and with measuring a pressure in the nozzle by a pressure sensor. Air is sucked by making use of the intake stroke of a sample suction pump.

Thus, the fundamental principle of the present invention exists in that a pressure supplying equipment is unnecessary, and a sampling pump is used for this purpose. This idea is new, and the invention is not restricted to the others unless the principle of the invention is changed.

## BRIEF DESCRIPTION OF THE DRAWINGS

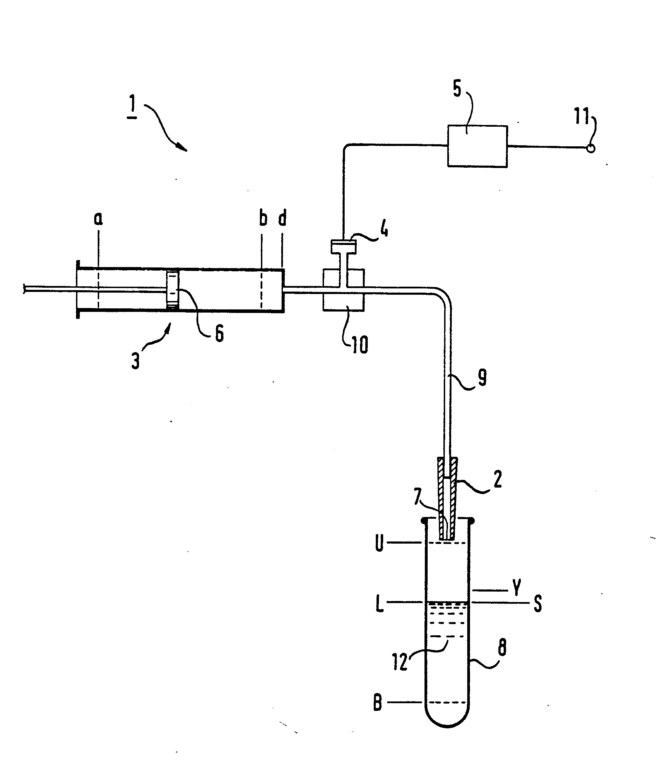

Fig. 1 is a summarised drawing showing an embodiment of the liquid surface detection equipment of the present invention.

## DETAILED DESCRIPTION OF THE INVENTION

The following embodiment showed in a drawing is illustrative of the present invention.

Fig. 1 shows an embodiment of the liquid surface detection equipment(1) of the invention, which is composed of a sampling nozzle(2), a plunger pump(3), a pressure sensor(4), and a pressure signal discriminator(5).

Detailed description of steps from liquid surface detection to sampling is made in the following.

The plunger(6) is first positioned at a, and the nozzle(2) begins to go down by the nozzle shifting mechanism(no drawing). When the nozzle tip(7) reaches the position U of the sample vessel, the plunger(6) is pushed out by the plunger driving mechanism(no drawing) to discharge air from the nozzle tip(7). The plunger(6) is so set as to just reach the point b when the nozzle(2) reaches the position B. The nozzle position U and B are the highest and lowest position of the sample liquid surface L respectively. Until the nozzle tip(7) reaches the liquid surface L, the pressure rise in the piping(9) can be practically neglected. The pressur in the piping(9) is measured by the pressure sensor(4) through the three way joint(10), and the sensor output is connected to the pressure signal discriminator(5) composed of a sensor amplifier, a differential circuit, and a comparative circuit. When the nozzle tip(7) reaches the liquid surface L, the pressure in the piping(9) suddenly rises and the liquid surface discrimination signal ouput(11) generates the liquid surface detection signal. To obtain the speedy response of the liquid surface detection, the inside volumes of the piping-

(9), the three way joint(10), the pressure sensor(4), and the nozzle(2) are required to be designed as small as possible. By the liquid surface detection signal output(11), the nozzle shifting mechanism and plunger(6) stop and at the same time the stop position S is memorized. For instance, in case a pulse-motor is used as a driving means, the memory of the stop position S can be obtained by memorizing the driving pulse number. Next, the nozzle(2) goes up until the position Y by a constant range, and at this time the plunger(6) is pushed out until the position b, which is the start position of the sample suction. Again, the nozzle(2) goes down until the former position S, and the plunger(6) is drawn out and the desired amount of the sample-(12) is sampled in the nozzle(2). In this time, the position of the nozzle tip(7) can be set to the optional position other than S, namely, to the optimum position for sucking the sample. After sampling, the nozzle(2) goes up and is moved to the transfer object, and the plunger(6) is pushed out until the point d to discharge the sample(12) in the nozzle(2). After discharge of the sample(12), the plunger(6) returns to the position a to prepare for next sampling.

Further, liquid surface detection can be conducted by sucking air from the nozzle tip(7). That is, with drawing out the plunger(6), the nozzle(2) is allowed to go down, and by the pressure chage at the time when the nozzle tip(7) reaches the liquid surface L, the liquid surface detection signal output is generated. By using this method, the liquid surface is detected nearly similarly with the above-mentioned embodiment. In this method, however, since it is feared that the sample(12) may be sometimes sucked in detecting the liquid surface, before allowing the nozzle(2) to go up it is preferable to push out a little the plunger(6) to discharge the sample. Because, if the plunger is pushed out after allowing the nozzle(2) to go up, sometimes the sample(12) does not drop, then in sucking the sample(12) the change of the initial pressure makes the sampling accuracy worse.

As mentioned above, the liquid surface detection method and the equipment of the present invention are low in cost owing to the few constitution elements, because the pump for sucking the sample, e.g. the plunger pump, also serves for the liquid surface detection function. Accordingly, the operation method is simple, sure, and highly reliable, and sampling from a sample vessel of small mouth is made posible, and it can be applied for any sampling equipment. Further, since the sample sticking to the outside of the nozzle tip is extremely little, highly accurate sampling of a micro sample is made possible. In addition, it has a extremely useful effect that monitoring of nozzle clogging or sample suction pump slip in sucking or discharging a sample is also made possible by the output from the pressure sensor.

## Claims

1. A method for detecting a liquid surface, that is, a method for measuring a liquid surface level by detecting the approach or contact of a sampling nozzle with the sample liquid surface to be sampled by detecting a pressure change in the sampling nozzle with discharging or sucking air from the sampling nozzle, wherein discharging or sucking air from the sampling nozzle is conducted by making use of a sample suction pump.

2. A method for detecting a liquid surface of claim 1 wherein the sample suction pump is a plunger pump.

3. An equipment for detecting a liquid surface comprising a sampling nozzle, a sample suction pump so connected as to discharge or suck air from the sampling nozzle, and a pressure sensor which detects a pressure change in the sampling nozzle in discharging or sucking air.

4. An equipment for detecting a liquid surface of claim 3 wherein the sample suction pump is a plunger pump.

Neu eingereicht / Newly filed
Nouvellement déposé

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 169 071 (EASTMAN KODAK CO.)<br>* Whole document *<br>--- | 1-4 | G 01 N 35/06<br>G 01 F 23/14<br>G 01 N 1/00 |
| X | PATENT ABSTRACTS OF JAPAN, vol. 8, no. 157 (P-288)[1594], 20th July 1984; & JP-A-59 52 759 (TERUMO K.K.) 27-03-1984<br>* Abstract; figure *<br>--- | 1-4 | |
| P,X | EP-A-0 223 751 (CHEMILA)<br>* Whole document *<br>----- | 1-4 | |

| | TECHNICAL FIELDS SEARCHED (Int. Cl.4) |
|---|---|
| | G 01 N<br>G 01 F |

The present search report has been drawn up for all claims

| Place of search | Date of completion of the search | Examiner |
|---|---|---|
| THE HAGUE | 12-02-1988 | ROSE A.R.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)